# EUROPÄISCHE PATENTANMELDUNG

(11) **EP 3 633 238 A1**
(43) Veröffentlichungstag der Anmeldung: **08.04.2020**
(21) Anmeldenummer: 18465590.0
(22) Anmeldetag: 02.10.2018
(51) Int. Cl.: F16H 57/027, F16H 57/032, F16H 57/04

(54) **GETRIEBE, INSBESONDERE KLEINGETRIEBE FÜR EINE STELL- ODER STEUEREINRICHTUNG**

(71) Anmelder: Continental Automotive GmbH, 30165 Hannover (DE)
(72) Erfinder: Ghidel, Paul, 332080 Petrosani, Hunedoara (RO); Muresan, Daniel, 307220 Giroc (RO)

(57) **Zusammenfassung**

Ein Kleingetriebe (2) für eine Stell- oder Steuereinrichtung hat eine Belüftungseinrichtung (6) mit einem als Belüftungselement (10) ausgebildeten Formteil (9). Das Formteil (9) weist eine ausreichende Eigenstabilität auf und durchdringt das Getriebegehäuse (5). Damit gestaltet sich die Montage des Kleingetriebes (2) besonders einfach.

## Beschreibung

Die Erfindung betrifft ein Getriebe, insbesondere Kleingetriebe für eine Stell- oder Steuereinrichtung in einem Kraftfahrzeug, mit einem Bauteile des Getriebes von der Umgebung trennenden Getriebegehäuse und mit einer ein Belüftungselement aufweisenden Belüftungseinrichtung zur Belüftung der von dem Getriebegehäuse abgedeckten Bauteile des Getriebes.

Kleingetriebe für Elektrokleinmotoren werden insbesondere in Kraftfahrzeugen für verschiedenste Stell- und Steuereinrichtungen eingesetzt und sind aus der Praxis bekannt. Die Stell- und Steuereinrichtungen dienen beispielsweise für Sitzverstellungen, Fensterheber, Antriebe für verschiedene Klappen und Ladeluken und dergleichen.

Im Betrieb besteht die Gefahr, dass beispielsweise durch Temperaturerhöhung ein Druck in dem Getriebegehäuse entsteht. Zudem kann sich Kondenswasser in dem Getriebegehäuse ansammeln. Andererseits ist das Getriebegehäuse auch Belastungen aus der Umwelt durch Staub, Öl oder Wasser ausgesetzt. Die Belüftungseinrichtung hat daher die Aufgabe, einen Druck aus dem Getriebegehäuse entweichen zu lassen und die Ansammlung von Kondenswasser zu vermeiden.

Man könnte daran denken eine Belüftungsbohrung in dem Getriebegehäuse anzuordnen. Jedoch muss ein Eintrag von Schmutz und Flüssigkeit aus der Umgebung in das Getriebegehäuse vermieden werden. Durch eine solche Belüftungsbohrung kann jedoch insbesondere bei Kleingetrieben Feuchtigkeit in das Getriebegehäuse eindringen. Zudem kann die Belüftungsbohrung durch Schmutz verstopfen.

Aus der Praxis ist ein Getriebe bekannt geworden, welches eine auf dem Getriebegehäuse angeordnete Membrane als Belüftungseinrichtung hat. Diese Membrane ermöglicht es Luft durchzulassen, jedoch Schmutz und Feuchtigkeit aus der Umgebung abzuhalten. Nachteilig bei diesem Getriebe ist jedoch, dass die Membrane hohe Kosten verursacht und zudem häufig durch ein weiteres Schutzbauteil vor mechanischer Belastung geschützt werden muss.

Der Erfindung liegt das Problem zugrunde, ein Getriebe der eingangs genannten Art so weiter zu bilden, dass es besonders einfach aufgebaut und kostengünstig zu fertigen ist.

Dieses Problem wird erfindungsgemäß dadurch gelöst, dass das Belüftungselement als von dem Getriebegehäuse unmittelbar abgestütztes Formteil ausgebildet ist und eine Wandung des Getriebegehäuses durchdringt.

Durch diese Gestaltung stellt das Formteil die Belüftung des Getriebegehäuses sicher. Da das Formteil das Getriebegehäuse durchdringt, lässt es sich einfach zusammen mit dem Getriebegehäuse montieren. Das Getriebe ist hierdurch besonders einfach aufgebaut und lässt sich kostengünstig fertigen. Die Gestaltung des Belüftungselements als unmittelbar von dem Getriebegehäuse abgestütztes Formteil hat den Vorteil, dass die Belüftungseinrichtung kein weiteres Stützbauteil oder keine Halterungen benötigt. Das Formteil muss den mechanischen, auf die Wandung des Getriebegehäuses einwirkenden Belastungen standhalten und ist vorzugsweise druckfest und biegesteif gestaltet. Hierfür eignen sich insbesondere poröse Kunststoff- oder Metallformteile.

Die Belüftung des Getriebegehäuses lässt sich gemäß einer anderen vorteilhaften Weiterbildung der Erfindung zuverlässig sicherstellen, wenn das Formteil aus einem luftdurchlässigen Material gefertigt ist. Solche Formteile können beispielsweise als Sinterfilter oder dergleichen gefertigt sein. Solche Sinterfilter werden häufig aus Sintermetall gefertigt.

Ein luftundurchlässiges Formteil vermag gemäß einer anderen vorteilhaften Weiterbildung der Erfindung eine ausreichende Belüftung sicherstellen, wenn eine Verbindung des Formteils mit angrenzenden Bereichen des Getriebegehäuses als luftdurchlässiger Spalt ausgebildet ist. Durch diese Gestaltung vermag das Formteil beispielsweise die Temperatur nach außen ableiten. Ein innerhalb des Getriebegehäuses aufstauender Luftdruck wird durch den Spalt abgebaut.

Die Fertigung des Getriebegehäuses mit dem Belüftungselement gestaltet sich gemäß einer anderen vorteilhaften Weiterbildung der Erfindung besonders einfach, wenn das Formteil formschlüssig in dem Getriebegehäuse gehalten ist.

Eine zuverlässige Befestigung des Formteils in dem Getriebegehäuse lässt sich gemäß einer vorteilhaften Weiterbildung der Erfindung einfach erzeugen, wenn das Getriebegehäuse aus Spritzguss gefertigt ist und das Formteil von dem Spritzguss umspritzt ist. Als Spritzguss eignet sich in Abhängigkeit von dem Einsatzgebiet des Getriebes beispielsweise Kunststoffspritzguss oder Leichtmetallspritzguss.

Die Montage der Belüftungseinrichtung gestaltet sich gemäß einer anderen vorteilhaften Weiterbildung der Erfindung besonders einfach, wenn das Formteil in einem Deckel des Getriebegehäuses angeordnet ist. Weiterhin lassen sich vorhandene Getriebe einfach durch Austausch des Deckels mit der Belüftungseinrichtung nachrüsten.

Die formschlüssige Befestigung des Formteils in dem Getriebegehäuse gestaltet sich gemäß einer anderen vorteilhaften Weiterbildung der Erfindung besonders einfach, wenn das Formteil in dem das Getriebegehäuse durchdringenden Abschnitt wellenförmig gestaltet ist. Durch die Wellenform ist der Querschnitt des Formteils über den das Getriebegehäuse durchdringenden Abschnitt konstant gehalten.

Die Halterung des Formteils in dem Getriebegehäuse weist gemäß einer anderen vorteilhaften Weiterbildung der Erfindung eine hohe Festigkeit auf, wenn das Getriebegehäuse im Bereich des Formteils einen hervorstehenden Dom hat. Der Dom ermöglicht insbesondere die zuverlässige formschlüssige Halterung des wellenförmigen Abschnitts des Formteils.

Eine Wärmeabfuhr aus dem Getriebegehäuse lässt sich bei einer entsprechend wärmeleitfähigen Gestaltung des Formteils gemäß einer anderen vorteilhaften Weiterbildung der Erfindung einfach sicherstellen, wenn das Formteil einen an der Innenseite des Gehäuses anliegenden lang gestreckten Abschnitt hat und dass der lang gestreckte Abschnitt die Hälfte der Länge des Formteils aufweist. Weiterhin hat der lang gestreckte Abschnitt eine besonders große Oberfläche, so dass die Gefahr eines Ausfalls des Belüftungselements durch Verschmutzung der Oberfläche gering gehalten wird.

Eine große Oberfläche des Formteils lässt sich gemäß einer anderen vorteilhaften Weiterbildung der Erfindung sicherstellen, wenn das Formteil die der Umgebung zugewandte Außenseite des Getriebegehäuses überragt. Damit wird die Gefahr einer Verstopfung durch Verschmutzung der Oberfläche gering gehalten.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine Steuereinrichtung für ein Kraftfahrzeug mit einem Getriebe,
- Fig.2: einen Teilschnitt durch das Getriebegehäuse aus Figur 1 im Bereich einer Belüftungseinrichtung.

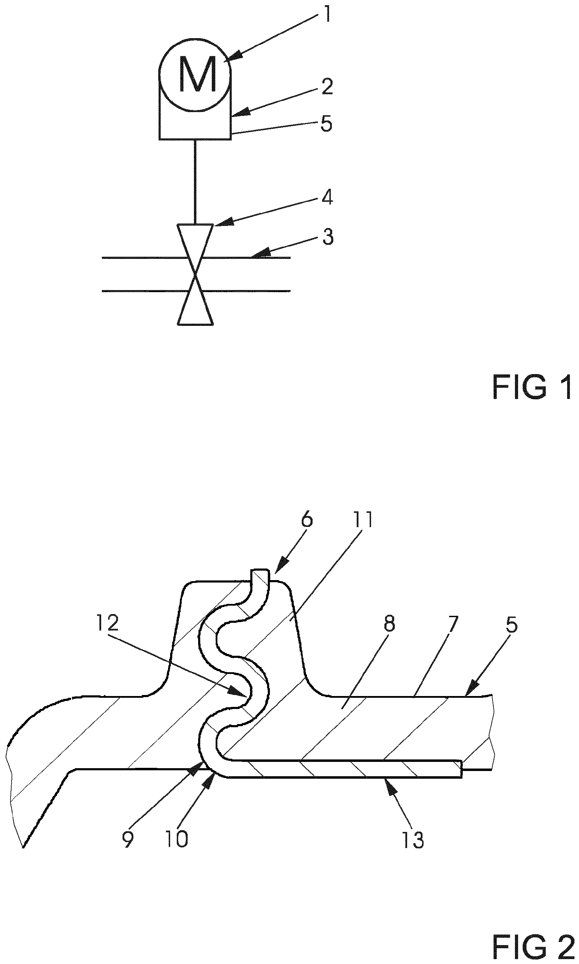

Figur 1 zeigt schematisch ein von einem Elektrokleinmotor 1 angetriebenes Kleingetriebe 2 am Beispiel einer Steuereinrichtung zur Ansteuerung eines in einem Kanal 3 angeordneten Ventils 4 eines Kraftfahrzeuges. Das Kleingetriebe 2 hat ein Getriebegehäuse 5, welches nicht dargestellte bewegliche Bauteile des Kleingetriebes 2 vor Schmutz und Feuchtigkeit von der Umgebung schützt und eine Belüftung des Kleingetriebes 2 sowie eine Abfuhr von Wärme und Feuchtigkeit aus dem Getriebegehäuse 5 ermöglicht. Das Getriebegehäuse 5 hat hierzu eine in Figur 2 dargestellte Belüftungseinrichtung 6.

Figur 2 zeigt einen Teilschnitt durch einen Teilbereich eines Deckels 7 des Getriebegehäuses 5 aus Figur 1 mit der Belüftungseinrichtung 6 in einer Schnittdarstellung. Die Belüftungseinrichtung 6 hat ein in einer Wandung 8 des Deckels 7 formschlüssig gehaltenes Formteil 9 als Belüftungselement 10. Das Formteil 9 ist von dem Material des Deckels 7 umspritzt und weist eine Eigenstabilität auf, mit der es mechanischen Belastungen standhält. Eine Abfuhr von Feuchtigkeit aus dem Getriebegehäuse 5 in die Umgebung kann beispielsweise dadurch erfolgen, dass das Formteil 9 aus einem porösen Material gefertigt ist oder dadurch, dass die Verbindung des Formteils 9 mit dem Material des Getriebegehäuses 5 nicht vollständig dicht ist. Das Getriebegehäuse 5 hat an der zur Umgebung weisenden Außenseite einen hervorstehenden Dom 11 zur Aufnahme eines wellenförmig gestalteten Abschnitts 12 des Formteils 9. An der Innenseite des Getriebegehäuses 5 hat das Formteil 9 einen lang gestreckten Abschnitt 13. Der lang gestreckte Abschnitt 12 hat ungefähr die gleiche Länge wie der wellenförmige Abschnitt 12 und nimmt damit etwa die Hälfte der Gesamtlänge des Formteils 9 ein. Weiterhin zeigt Figur 2, dass das Formteil 9 die der Umgebung zugewandte Außenseite des Getriebegehäuses geringfügig überragt.

## Patentansprüche

1. Getriebe, insbesondere Kleingetriebe (1) für eine Stell- oder Steuereinrichtung in einem Kraftfahrzeug, mit einem Bauteile des Getriebes von der Umgebung trennenden Getriebegehäuse (5) und mit einer ein Belüftungselement (10) aufweisenden Belüftungseinrichtung (6) zur Belüftung der von dem Getriebegehäuse (5) abgedeckten Bauteile des Getriebes, **dadurch gekennzeichnet, dass** das Belüftungselement (10) als von dem Getriebegehäuse (5) unmittelbar abgestütztes Formteil (9) ausgebildet ist und eine Wandung (8) des Getriebegehäuses (5) durchdringt.

2. Getriebe nach Anspruch 1, **dadurch gekennzeichnet, dass** das Formteil (9) aus einem luftdurchlässigen Material gefertigt ist.

3. Getriebe nach Anspruch 1 oder 2, **dadurch gekennzeichnet, dass** eine Verbindung des Formteils (9) mit angrenzenden Bereichen des Getriebegehäuses (5) als luftdurchlässiger Spalt ausgebildet ist.

4. Getriebe nach zumindest einem der Ansprüche 1 bis 3, **dadurch gekennzeichnet, dass** das Formteil (9) formschlüssig in dem Getriebegehäuse (5) gehalten ist.

5. Getriebe nach zumindest einem der Ansprüche 1 bis 4, **dadurch gekennzeichnet, dass** das Getriebegehäuse (5) aus Spritzguss gefertigt ist und das Formteil (9) von dem Spritzguss umspritzt ist.

6. Getriebe nach zumindest einem der Ansprüche 1 bis 5, **dadurch gekennzeichnet, dass** das Formteil in einem Deckel (7) des Getriebegehäuses (5) angeordnet ist.

7. Getriebe nach zumindest einem der Ansprüche 1 bis 6, **dadurch gekennzeichnet, dass** das Formteil (9) in dem das Getriebegehäuse (5) durchdringenden Abschnitt (12) wellenförmig gestaltet ist.

8. Getriebe nach zumindest einem der Ansprüche 1 bis 7, **dadurch gekennzeichnet, dass** das Getriebegehäuse (5) im Bereich des Formteils (9) einen hervorstehenden Dom (11) hat.

9. Getriebe nach zumindest einem der Ansprüche 1 bis 8, **dadurch gekennzeichnet, dass** das Formteil (9) einen an der Innenseite des Getriebegehäuses (5) anliegenden lang gestreckten Abschnitt (13) hat und dass der lang gestreckte Abschnitt (13) die Hälfte der Länge des Formteils (9) aufweist.

10. Getriebe nach zumindest einem der Ansprüche 1 bis 9, **dadurch gekennzeichnet, dass** das Formteil (9) die der Umgebung zugewandte Außenseite des Getriebegehäuses (5) überragt.
